(19) Europäisches Patentamt
European Patent Office
Office européen des brevets

(11) EP 0 466 911 B1

(12) **EUROPEAN PATENT SPECIFICATION**

(45) Date of publication and mention of the grant of the patent: **23.07.1997 Bulletin 1997/30**

(21) Application number: **91904718.3**

(22) Date of filing: **01.02.1991**

(51) Int Cl.[6]: **C08K 5/41**, C08K 5/42, C08L 31/02

(86) International application number: **PCT/US91/00740**

(87) International publication number: **WO 91/12290 (22.08.1991 Gazette 1991/19)**

(54) **TACKIFIABLE ACRYLIC EMULSION PRESSURE-SENSITIVE ADHESIVE HAVING EXCELLENT LOW-TEMPERATURE PERFORMANCE**

DRUCKEMPFINDLICHES KLEBKRAFTVERSTÄRKBARES ACRYLEMULSIONSKLEBEMITTEL MIT AUSGEZEICHNETEN NIEDRIGTEMPERATUREIGENSCHAFTEN

SUBSTANCE ADHESIVE A EMULSION ACRYLIQUE POUVANT ETRE RENDUE COLLANTE, PRESENTANT DES PERFORMANCES EXCELLENTES A BASSE TEMPERATURE

(84) Designated Contracting States: **BE CH DE DK ES FR GB IT LI LU NL SE**

(30) Priority: **07.02.1990 US 476818**

(43) Date of publication of application: **22.01.1992 Bulletin 1992/04**

(73) Proprietor: **AVERY DENNISON CORPORATION**
**Pasadena, CA 91109 (US)**

(72) Inventors:
- **LEE, Ivan, Sou, Phong**
  **Arcadia, CA 91106 (US)**
- **KELLER, Paul**
  **CH-8274 Gottlieben (CH)**
- **NORMAN, Richard James**
  **Cramlington, Northumberland NE23 63J (GB)**
- **DORDICK, Robert, S.**
  **Lyndhurst, OH 44124 (US)**
- **ZAWADZKI, Mary, E.**
  **Long Beach, CA 90814 (US)**

(74) Representative: **Kirkham, Nicholas Andrew et al**
**Graham Watt & Co.,**
**Riverhead**
**Sevenoaks, Kent TN13 2BN (GB)**

(56) References cited:
**EP-A- 0 117 135** **EP-A- 0 351 193**
**US-A- 3 677 991** **US-A- 4 525 525**
**US-A- 4 925 908**

- **DATABASE WPIL Derwent Publications Ltd., London, GB; AN 89-96251**
- **DATABASE WPIL Derwent Publications Ltd., London, GB; AN 88-326904**
- **McCutcheon's Emulsifiers & Detergents, North American Edition, published 1982, pages 51, 71 and 180. See entire document**
- **McCutcheon's Detergents & Emulsifiers, International Edition, published 1976, page 2. See entire document**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 466 911 B1

## Description

### Field of the Invention

The present invention relates to pressure sensitive adhesives based on tacky emulsion polymers which are, as formed, useful as pressure-sensitive adhesives and receptive to tackification to form improved pressure sensitive adhesives. More particularly, the pressure sensitive adhesives of the instant invention have excellent low-temperature performance as well as adhesion to wet surfaces and to high and low energy surfaces.

### Background of the Invention

Pressure sensitive adhesives may be based on emulsion polymers. Some emulsion polymers are inherently tacky and function as pressure-sensitive adhesives, while others require tackification to achieve this end. It is desirable in offering a variety of products to provide emulsion polymers which are inherently tacky, but which also accept tackification to enable control in balancing adhesive properties.

It is also desirable for general purpose applications to provide an adhesive which bonds well to substrates of different surface energies over a broad range of end-use temperatures.

Such goals are realized by the practice of the instant invention.

### Summary of the Invention

According to the present invention, there is provided inherently tacky acrylic emulsion adhesive polymers having excellent adhesion to a wide variety of surfaces including polar, relatively high energy surfaces such as stainless steel; nonpolar, relatively low energy surfaces such as polyethylene; and difficult-to-bond surfaces such as corrugated cardboard. Moreover, peel adhesion at low temperatures and adhesion to wet surfaces is excellent and, when as part of a laminate stock such as pressure-sensitive adhesive label stock, provides excellent highspeed converting characteristics such as die cutting, matrix stripping and fan folding. In sum, the adhesive polymers are broad-based and serve to replace many solvent-based adhesives on an ecologically safe basis, as well as many emulsion-based adhesives, thus serving a variety of markets.

The inherently tacky emulsion pressure sensitive adhesives of the instant invention are based on polymers which contain, on an interpolymerized basis and based on the total weight of the polymer, about 95% to 97.5% of at least one alkyl ester of acrylic acid containing from about 1 to about 10 carbon atoms in the alkyl group, preferably butyl acrylate, 2-ethyl hexyl acrylate and mixtures thereof, and from about 2.5% to 5% of a mixture of unsaturated carboxylic acids containing from 3 to about 5 carbon atoms, preferably a mixture of acrylic and methacrylic acids in respective weight ratios of about 1:1 to about 1:3, preferably about 1:1 to about 1:2, the emulsion polymer preferably having a glass transition temperature of less than about -10°C, and a gel content greater than about 50% by weight of the polymer. The emulsion adhesive polymers are provided in admixture with an anionic surfactant system comprising, based on the weight of surfactants and polymer, of from about 1% to 2% by weight of a sodium alkyl ether sulfate, about 0.1% to about 0.2% by weight of a sodium di-alkyl sulfosuccinate, and about 0.15% to 0.3% by weight of a disodium ethoxylated alkyl alcohol half ester of sulfosuccinic acid.

While the emulsified mixture of polymer and anionic surfactant system may be used as such, the mixture may be ideally tackified by the inclusion of dispersible tackifiers, preferably rosin or tall oil based. Ideally the tackifiers are provided in dispersion.

The amount of tackifier provided to the mixture will vary depending on the end use application, and will generally be present in an amount up to about 50% by weight based on the weight of the tackifier and polymer, preferably from about 20% to about 40% by weight.

The pressure sensitive emulsion systems of the present invention are adaptive to form smooth coatings which exhibit quick drying and a high tolerance for silicone contamination.

### Detailed Description

The present invention relates to pressure sensitive adhesive compositions which provide high adhesion to polar, nonpolar, and difficult-to-bond substrates with excellent shear properties. The adhesives moreover exhibit excellent adhesion to skin and wet surface as well as tolerance for silicone contamination. The adhesive polymers are emulsion polymers, i.e., prepared by emulsion polymerization; are used with an anionic surfactant system and optionally tackified. Tackification is preferably by combining with an aqueous dispersion of a water dispersible, compatible tackifier.

The pressure sensitive adhesives of the instant invention can be adapted to be used on almost any available face stock.

As compared to prior art acrylic pressure sensitive adhesives which do not give good adhesion to nonpolar surfaces such as polyolefins and certain other surfaces such as recycled corrugated cardboard, the pressure sensitive adhesives provided in accordance with the instant invention have excellent adhesion to both polyolefins and recycled corrugated cardboard and good low-temperature performance. The adhesives are most universal in their use, a result not heretofore achieved in single polymer emulsion pressure sensitive adhesives. Properties provided by the combination of polymers and anionic surfactant system enable high speed convertibility in label manufacture.

The emulsion based pressure sensitive adhesives of the instant invention are based on polymers which contain, on a percent by weight basis, from about 95% to about 97.5% by weight total of at least one alkyl ester of acrylic acid containing about 1 to about 10 carbon atoms in the alkyl group. Useful alkyl acrylates include n-butyl acrylate, 2-ethyl hexyl acrylate, isooctyl acrylate and the like. Butyl acrylate, 2-ethyl hexyl acrylate and mixtures thereof are preferred. Butyl acrylate is most preferred.

The second monomeric component is a mixture of $\alpha$, $\beta$ unsaturated carboxylic acids present in a total amount of at least about 2.5% by weight, preferably from about 2.5% to about 5% by weight.

The unsaturated carboxylic acid may contain from about 3 to about 5 carbon atoms and includes among others, acrylic acid, methacrylic acid, itaconic acid and the like. Mixtures of acrylic acid and methacrylic acid in a respective weight ratio of about 1:1 to about 1:3, preferably from about 1:1 to about 1:2.

Other monomers are not required to provide broad based emulsion adhesive systems but may be included. Styrenic monomers are, however, to be avoided.

Gel content or percent insolubles of the polymer are at least about 50% by weight and typically range from about 50% to about 65% by weight which provides excellent cohesive strength without internal cross-linking or the use of multifunctional monomers. In this regard, gel represents the amount of polymer which is insoluble in tetrahydrofuran expressed in percent by weight and determined by the membrane gel partitioning method. In this method, about 600 to 800 milligrams of 100% solid polymer is weighed onto a millipore membrane disk of 5 micrometer porosity. The disk is heat sealed and transferred to a scintillation vial. about 20 milliliters of tetrahydrofuran are added to the vial and the vial is rotated on a shaker for 16 to 24 hours. The sealed disk is then removed, washed with tetrahydrofuran, and dried first by placing it on a Whatman No. 1 filter paper, followed by exposure to 100°C in the oven for a few hours. The dried disk is weighed and the insoluble portion of the polymer determined by the equation:

$$\text{Per cent insoluble} = \frac{(b - c)}{a} \times 100 = \%\ \text{gel}$$

wherein

a = total weight of 100% solids polymer
b = the weight of the polymer plus membrane before tetrahydrofuran treatment
c = polymer plus membrane remaining after tetrahydrofuran treatment.

The emulsion polymers have a glass transition temperature less than about -10°C, preferably less than about -30°C, and give, when combined with the anionic surfactant system, a good balance of adhesive properties at ambient and low temperatures. Properties are modified by tackification.

Polymers of the instant invention are prepared by emulsion polymerization under conditions of agitation in an autogenous atmosphere in the presence of suitable polymerization initiators such as water soluble persulfates. Chain transfer agents' such as alkyl mercaptans can be employed. Electrolytes can be used to stabilize the emulsion. Solids content will vary depending upon the selected polymerization conditions. Polymerization conditions are desirably chosen to maintain grit levels low. Polymerization typically occurs under acid conditions and the emulsion formed is neutralized typically with ammonia to a final pH of from about 6 to about 6.5.

Polymers of the instant invention can be produced at a high solids level, at temperatures from 70°C to 85°C, with use of an initial batch of monomers followed by addition of the balance of the monomers being added to the emulsion reaction system over a period of time.

The emulsion polymers are utilized and preferably formed in the presence of an anionic surfactant system present in an amount of from up to about 2.5% by weight based on the weight of the monomers and anionic surfactant system.

The principle anionic surfactant is present in a total amount of from about 1% to about 2% by weight of the mixture and is a sodium alkyl ether sulfate of the formula:

$$CH_3\text{-}(CH_2)\text{-}_nCH_2O(CH_2CH_2O)_x\ SO_3Na$$

wherein n represents the number of - $(CH_2)$ - groups normally in the range of about 6 to about 12 and x represents the

number of repeating ethoxy groups normally in the range of 2 to about 30, preferably about 20 to about 30. The principal anionic surfactant is used in admixture with from about 0.1% to about 0.2% by weight of sodium dialkyl sulfosuccinate of the formula:

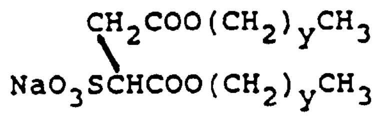

wherein y is independently the number of repeating -($CH_2$)- groups in each alkyl group, typically in the range of about 6 to about 18, preferably about 7, and the like. The third anionic surfactant is present in an amount of from 0.2% to about 0.3% by weight and is a disodium ethoxylated alkyl alcohol half ester of an sulfosuccinic acid in which the alkyl group contains from about 10 to about 12 carbon atoms and the like.

The emulsified polymer-surfactant mixture can be used as such or tackified with a water dispersible tackifier that is compatible with the polymer. The presently preferred tackifiers are rosin ester based and/or tall oil ester based tackifiers present in an a amount of up to about 50% by weight, preferably from about 20% to about 40% by weight, based on the weight of the tackifier and polymer. Other tackifiers such as alkyl, aryl hydrocarbon and the like may also be used. Suitable tackifiers include, among others, the Snowtack family of and dispersed tackifiers sold by Tenneco; the Aquatac and Zonester dispersed tackifiers sold by Arizona Chemical Company; the Tacolyn and Piccovar dispersed tackifiers sold by Hercules; the Permatac dispersed tackifiers sold by Alliance Technical Products Ltd.; the Bervik dispersed tackifiers sold by a joint venture company formed by Arizona Chemical and Bervik Xemi of Sweden; and the like. Mixtures of tackifiers can be used. The surfactant system cooperates to enhance compatibility and processability of the emulsion, at high solids content, including coatability and leveling and performance characteristics such as low-temperature adhesion, wet stick, adhesion to skin and high cohesive strength even in the absence of internal cross-linking. The emulsified composition of this invention may be applied to a variety of face stocks and for labels and tapes by direct or transfer coating as is conventional in the art.

**Examples 1 to 6**

There was formed by emulsion polymerization an emulsified polymer containing, on an interpolymerized basis, about 97% by weight butyl acrylate, 1.2% by weight acrylic acid and 1.8% by weight methacrylic acid (Polymer 1). The emulsion contained about 0.12 part by weight of an anionic sodium dioctyl sulfosuccinate, 0.24 part by weight of an anionic disodium ethoxylated alcohol [$C_{10}$-$C_{12}$] half ester of sulfosuccinic acid, and 1.5 parts by weight anionic ethoxylated lauryl alcohol sodium sulfate containing about 25 ethylene oxide units per molecule per 100 parts by weight polymer. This formed a base emulsion of Polymer 1 which was utilized as such (Example 1) and when combined with tackifier dispersions, namely Hercules Tacolyn 64 (Example 2), Hercules Foral 85-S5 (Example 3), Permatac E607 (Example 4), a 50-50 blend of Arizona 6025 and 6085 (Example 5), and mixture of Snowtack SE 325A and 380A (Example 6). Weight proportion of polymer to tackifier was about 75:25. The adhesion values to several surfaces at test temperatures shown are reported in TABLE 1 in which "PE" means polyethylene, "Cardboard" means recycled corrugated cardboard, Looptack and Peel are reported in N/m and Shear in minutes. Adhesive coat weight was about 25g/m$^2$. Conditioning time for each test was 20 minutes of the temperature specified. The test methods or modifications thereof are those generally accepted in the art and published by the Pressure Sensitive Tape Council, American Society for Testing Materials and the like.

TABLE 1

| Substrate, Test | Ex 1 | Ex 2 | Ex 3 | Ex 4 | Ex 5 | Ex 6 |
|---|---|---|---|---|---|---|
| PE Film, Looptack @ 23°C | -- | 650 | 619 | 545 | 440 | 578 |
| PE Film, Looptack @ 5°C | -- | 850 | 320 | 790 | 480 | 732 |
| PE Film, Looptack @ -5°C | -- | 206 | 67 | -- | 176 | 257 |
| Glass, Looptack @ 23°C | 830 | 831 | 683 | 830 | 535 | 800 |
| Cardboard, Looptack @ 23°C | 346 | 420 | 250 | -- | 425 | 373 |
| Cardboard, Looptack @ 5°C | 477 | 430 | 310 | -- | 228 | 391 |
| PE Film, 90 degree Peel @ 23°C | -- | 522 | 235 | 363 | 255 | 472 |
| Cardboard, 90 degree Peel @ 23°C | 280 | 225 | 320 | -- | 410 | 403 |
| Shear ½"x½", 500g @ 23°C | 173 | 30 | 81 | 20.3 | 7.8 | 30.5 |

**Examples 7 to 23**

The Example 1 was repeated except that the emulsion was mixed in different proportions with various tackifiers. The tackifiers were Snowtack 301A (Ex. 8 to 11). Piccovar AP-25-55W (Ex. 12 to 15), Permatac E-607 (Ex. 16 to 19) and Zonester-6085 (Ex. 20 to 23). The various properties tested are shown in TABLES 2 to 5 below when coat weight was from 20 to 25g/m$^2$ on 22.68kg (50 pound) EDM uncoated litho paper facestock. In the Tables quantities are expressed in lb/in; 1lb/in = 1.75127 x 10$^2$N/m.

TABLE 2

| | Ex 7 | Ex 8 | Ex 9 | Ex 10 | Ex 11 |
|---|---|---|---|---|---|
| %, Polymer 1 | 100 | 96 | 88 | 76 | 57 |
| %, Tackifier | 0 | 4 | 12 | 24 | 43 |
| Peel Adhesion: 90 degree angle, 2 minute dwell, lb/in | | | | | |
| Glass | 1.25 | 1.15 | 1.00 | 1.20 | sft |
| HDPE Film | 1.25 | 1.10 | 1.15 | 1.20 | 1.65 |
| LPDE Panel | 0.95 | 0.85 | 0.93 | 1.05 | sft |
| Cardboard | 1.15 | 1.15 | 1.00 | 1.00 | 1.00 |
| Peel Adhesion: 90 degree angle, 24 hours dwell, lb/in | | | | | |
| Glass | 1.60 | 1.55 | 1.55 | 1.50 | 1.70 |
| HDPE Film | 1.43 | 1.50 | 1.60 | 1.93 | pft |
| LPDE Panel | 0.95 | 0.90 | 1.35 | 1.75 | ft |
| Cardboard | 1.45 | 1.40 | 1.20 | sft | pst |
| Loop Tack, lb/in | | | | | |
| Glass | 2.30 | 2.20 | 2.50 | 2.70 | 3.80 |
| HDPE Film | 2.18 | 2.20 | 2.25 | 2.45 | 3.05 |
| LPDE Panel | 1.05 | 1.15 | 1.25 | 1.70 | 2.30 |
| Cardboard | 1.70 | 1.70 | 1.55 | 1.60 | 1.75 |
| 500 gram, Shear, Min. | | | | | |
| | 76.7 | 30.9 | 42.2 | 21.8 | 17.7 |

HDPE - High density polyethylene
LDPE - Low density polyethylene
sft - Slight facestock tear
pst - partial facestock tear
ft - complete facestock tear

TABLE 3

| | Ex 12 | Ex 13 | Ex 14 | Ex 15 |
|---|---|---|---|---|
| %, Polymer 1 | 96 | 87 | 74 | 55 |
| %, Tackifier | 4 | 13 | 26 | 45 |
| Peel Adhesion: 90 degree angle, 2 minute dwell, lb/in | | | | |
| Glass | 0.95 | 0.88 | 0.85 | 1.18 |
| HDPE Film | 1.00 | 0.95 | 0.95 | 1.10 |
| LPDE Panel | 0.90 | 0.85 | 0.75 | 0.75 |
| Cardboard | 1.00 | 0.90 | 0.75 | 0.75 |
| Peel Adhesion: 90 degree angle, 24 hours dwell, lb/in | | | | |
| Glass | 1.45 | 1.30 | 1.20 | 1.55 |
| HDPE Film | 1.45 | 1.15 | 1.15 | 1.50 |
| LPDE Panel | 1.65 | 1.30 | 0.90 | 0.85 |

TABLE 3 (continued)

| | Ex 12 | Ex 13 | Ex 14 | Ex 15 |
|---|---|---|---|---|
| Peel Adhesion: 90 degree angle, 24 hours dwell, lb/in | | | | |
| Cardboard | 1.35 | 1.20 | 1.15 | 1.30 |
| Loop Tack, lb/in | | | | |
| Glass | 2.40 | 2.08 | 1.95 | 2.75 |
| HDPE Film | 1.63 | 1.65 | 1.50 | 1.70 |
| LPDE Panel | 1.00 | 1.10 | 1.00 | 0.98 |
| Cardboard | 1.30 | 0.80 | 0.90 | 0.70 |
| 500 gram, Shear, Min. | | | | |
| | 45.3 | 41.6 | 35.7 | 8.8 |

TABLE 4

| | Ex 16 | Ex 17 | Ex 18 | Ex 19 |
|---|---|---|---|---|
| %, Polymer 1 | 96 | 88 | 76 | 57 |
| %, Tackifier | 4 | 12 | 24 | 43 |
| Peel Adhesion: 90 degree angle, 2 minute dwell, lb/in | | | | |
| Glass | 1.05 | 1.00 | 1.20 | 1.30 |
| HDPE Film | 1.03 | 1.13 | 1.30 | sft |
| LPDE Panel | 0.70 | 0.80 | 1.00 | sft |
| Cardboard | 1.40 | .95 | 1.00 | sf |
| Peel Adhesion: 90 degree angle, 24 hours dwell, lb/in | | | | |
| Glass | 1.15 | 1.15 | 1.35 | pft |
| HDPE Film | 1.40 | 1.40 | pft | ft |
| LPDE Panel | 0.95 | 1.00 | 1.20 | pft |
| Cardboard | st | st | st | st |
| Loop Tack, lb/in | | | | |
| Glass | 2.00 | 2.03 | 2.40 | sft |
| HDPE Film | 2.05 | 2.13 | 2.60 | 3.35 |
| LPDE Panel | 1.50 | 1.83 | 2.40 | 2.95 |
| Cardboard | 1.55 | 1.20 | 1.30 | 1.60 |
| 500 gram, Shear, Min. | | | | |
| | 59.0 | 30.4 | 25.2 | 13.0 |
| st = substrate tear | | | | |

TABLE 5

| | Ex 20 | Ex 21 | Ex 22 | Ex 23 |
|---|---|---|---|---|
| %, Polymer 1 | 94.9 | 84.7 | 71.1 | 49.9 |
| %, Tackifier | 5.1 | 15.3 | 28.9 | 51.1 |
| Peel Adhesion: 90 degree angle, 2 minute dwell, lb/in | | | | |
| Glass | 1.30 | 1.43 | pft | ft |
| HDPE Film | 1.00 | 1.28 | pft | ft |
| LPDE Panel | 0.88 | 1.25 | pft | fdt |
| Cardboard | 0.80 | 0.85 | 1.00 | 0.70 |

TABLE 5 (continued)

| | Ex 20 | Ex 21 | Ex 22 | Ex 23 |
|---|---|---|---|---|
| Peel Adhesion: 90 degree angle, 24 hours dwell, lb/in | | | | |
| Glass | 0.80 | sft | pft | ft |
| HDPE Film | sft | sft | pft | ft |
| LPDE Panel | 1.30 | 1.80 | pft | ft |
| Cardboard | 1.45 | 1.55 | 1.20 | 1.20 |
| Loop Tack, lb/in | | | | |
| Glass | 3.20 | 3.35 | pft | ft |
| HDPE Film | 2.20 | 2.70 | sft | ft |
| LPDE Panel | 1.55 | 1.80 | 2.85 | 1.95 |
| Cardboard | 2.05 | 2.20 | 2.50 | 1.50 |
| 500 gram, Shear, Min. | | | | |
| | 161.2 | 183.8 | 154.3 | 148.4 |

## Claims

**1.** An aqueous pressure sensitive adhesive emulsion comprising:

(a) an inherently tacky polymer having a glass transition temperature less than about -10°C and a gel content greater than about 50% by weight and comprising:

i. at least one alkyl ester of acrylic acid containing from 1 to 10 carbon atoms in the alkyl group, the total of alkyl ester present in an amount of from 95% to 97.5% by weight of the polymer, and
ii. a mixture of α, β ethylenically unsaturated carboxylic acids present in a total amount of from 2.5% to 5% by weight of the polymer; and

(b) an anionic surfactant system consisting of, based on the total weight of the anionic surfactant system and polymer:

i. from 1% to 2% by weight, a sodium alkyl ether sulfate of the formula:

$$CH_3\text{-}(CH_2)_n\text{-}CH_20\ (CH_2CH_2O)_x\ SO_3Na$$

wherein n is from 6 to 12 and x is from 2 to 30, e.g. from 20 to 30,
ii. from 0.15% to 0.3% by weight of disodium ethoxylated alkyl alcohol half ester of sulfosuccinic acid wherein the alkyl group contains e.g. from 10-12 carbon atoms, and
iii. from 0.1% to 0.2% by weight of sodium dialkyl sulfosuccinate of the formula:

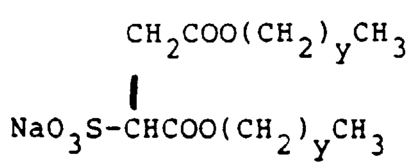

wherein each y independently has a value of from 6 to 18.

**2.** A pressure sensitive adhesive emulsion as claimed in claim 1 in which the alkyl ester of acrylic acid is selected from 2-ethyl hexyl acrylate, butyl acrylate and mixtures thereof.

**3.** A pressure sensitive adhesive emulsion as claimed in claim 1 or claim 2 where the mixture of ethylenically unsaturated acids is a mixture of acrylic acid and methacrylic acid provided at a weight ratio of acrylic acid to methacrylic of 1:1 to 1:3, e.g. 1:1 to 1:2.

**4.** A pressure sensitive adhesive emulsion as claimed in any one of claims 1, 2 and 3 in which the adhesive is tackified by the addition of a compatible tackifier present in an amount up to about 50% by weight based on the weight of the polymer and the tackifier.

**5.** A pressure sensitive adhesive emulsion as claimed in claim 4 in which the tackifier is selected from rosin esters, tall oil esters and mixtures thereof.

**6.** An aqueous pressure sensitive adhesive emulsion according to claim 5 comprising:

(a) about 76 parts by weight of an inherently tacky pressure sensitive adhesive polymer having a glass transition temperature less than about -10°C and a gel content greater than about 50% by weight and comprising about 97% by weight of butyl acrylate and about (1.2% by weight acrylic acid and about 1.8 per cent by weight methacrylic acid;
(b) for each 100 parts by weight polymer, an anionic surfactant system comprising:

i. 1.5 parts by weight of an ethoxylated lauryl alcohol sodium sulfate containing about 25 ethylene oxide units per molecule,
ii. about 0.24 parts by weight of disodium ethoxylated alcohol [$C_{10}$-$C_{12}$] half esters of sulfosuccinate and,
iii. about 0.12 part by weight of sodium dioctyl sulfosuccinate, and

c) about 24 parts by weight of a water dispersible tackifier.

**7.** A process for preparing the pressure sensitive adhesive according to any one of claims 1-6 comprising a polymerisation step under conditions of agitation in an autogenous atmosphere in the presence of suitable polymerisation initiators.

**8.** Use of an anionic surfactant system in the formation of a pressure-sensitive adhesive emulsion, wherein, based on the total weight of the anionic surfactant system and polymer, the anionic surfactant system comprises:

i. from 1% to 2% by weight of a sodium alkyl ether sulfate of the formula:

$$CH_3\text{-}(CH_2)_nCH_20\ (CH_2CH_20)_x\ SO_3Na$$

wherein n is from 6 to 12 and x is from 2 to 30, e.g. from 20 to 30;
ii. from 0.15% to 0.3% by weight of disodium ethoxylated alkyl alcohol half ester of sulfosuccinic acid wherein the alkyl group contains e.g. from 10-12 carbon atoms; and iii. from 0.1% to 0.2% by weight of sodium dialkyl sulfosuccinate of the formula:

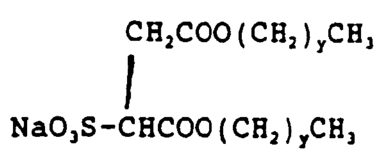

wherein each y independently has a value of from 6 to 18.

**9.** Use according to claim 8, wherein the pressure-sensitive adhesive emulsion further includes a compatible tackifier present in an amount up to about 50% by weight based on the weight of the polymer and the tackifier.

**10.** Use according to claim 9, wherein the tackifier is selected from rosin esters, tall oil esters and mixtures thereof.

## Patentansprüche

1. Eine wässrige druckempfindliche Klebmittelemulsion, die folgendes umfaßt:

a) ein seiner Eigenschaft nach klebriges Polymer mit einer Glasübergangstemperatur, die niedriger als etwa -10°C ist, und einem Gelgehalt, der höher als etwa 50 Gewichts-% ist, und das:

i) wenigstens einen Alkylester von Acrylsäure, der 1 bis 10 Kohlenstoffatome in der Alkylgruppe enthält, wobei der gesamte Alkylester in einer enge von 95 bis 97,5 Gewichts-% des Polymeren vorhanden ist, und
ii) ein Gemisch aus α, β-ethylenisch ungesättigten Carbonsäuren, das in einer Gesamtmenge von 2,5 bis 5 Gewichts-% des Polymeren vorhanden ist, enthält; und

b) ein anionisches oberflächenaktives System, das auf der Basis des Gesamtgewichts des anionischen oberflächenaktiven Systems und des Polymeren aus:

i) 1 bis 2 Gewichts-% von einem Natriumalkylethersulfat mit der Formel:

$$CH_3\text{-}(CH_2)_n\text{-}CH_2O\ (CH_2CH_20)_x\ SO_3Na$$

worin n von 6 bis 12 beträgt und x von 2 bis 30, zum Beispiel 20 bis 30, beträgt,
ii) 0,15 bis 0,3 Gewichts-% Dinatrium-ethoxyliertemalkylalkoholhalbester von Sulfosuccinsäure, bei dem die Alkylgruppe zum Beispiel 10 bis 12 Kohlenstoffatome enthält, und
iii)0,1 bis 0,2 Gewichts-% Natriumdialkylsulfosuccinat der Formel:

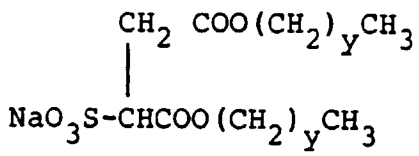

worin jedes y unabhängig voneinander einen Wert von 6 bis 18 aufweist, besteht.

2. Eine druckempfindliche Klebmittelemulsion nach Anspruch 1, bei der der Alkylester von Acrylsäure aus 2-Ethylhexylacrylat, Butylacrylat und Mischungen derselben ausgewählt ist.

3. Eine druckempfindliche Klebmittelemulsion nach Anspruch 1 oder Anspruch 2, bei der das Gemisch aus ethylenisch ungesättigten Säuren ein Gemisch von Acrylsäure und Methacrylsäure ist, das in einem Gewichtsverhältnis von Acrylsäure zu Methacrylsäure von 1:1 bis 1:3, zum Beispiel 1:1 bis 1:2, vorliegt.

4. Eine druckempfindliche Klebmittelemulsion nach einem der Ansprüche 1, 2 und 3, bei der das Klebmittel durch die Zugabe eines kompatiblen die Klebkraft erhöhenden Mittels, das in einer Menge bis zu etwa 50 Gewichts-%, bezogen auf das Gewicht des Polymeren und des die Klebkraft erhöhenden Mittels, vorhanden ist, klebrig gemacht worden ist.

5. Eine druckempfindliche Klebmittelemulsion nach Anspruch 4, bei der das die Klebkraft erhöhende Mittel aus Rosinestern, Tallölestern und Mischungen derselben ausgewählt ist.

6. Eine wässrige druckempfindliche Klebmittelemulsion nach Anspruch 5, die folgendes umfaßt:

a) etwa 76 Gewichtsteile eines seiner Eigenschaft nach klebrigen druckempfindlichen Klebmittelpolymeren mit einer Glasübergangstemperatur, die niedriger als etwa -10°C ist, und einem Gelgehalt, der höher als etwa 50 Gewichts-% ist, und das etwa 97 Gewichts-% Butylacrylat und etwa 1,2 Gewichts-% Acrylsäure und etwa 1,8 Gewichts-% Methacrylsäure umfaßt;
b) auf jede 100 Gewichtsteile Polymer ein anionisches oberflächenaktives System, das:

i) 1,5 Gewichtsteile von einem ethoxylierten Laurylalkoholnatriumsulfat, das etwa 25 Ethylenoxideinheiten

pro Molekül enthält,
ii) etwa 0,24 Gewichtsteile Dinatrium-ethoxylierteralkohol [$C_{10}$-$C_{12}$]-halbester von Sulfosuccinat und
iii)etwa 0,12 Gewichtsteile Natriumdioctylsulfosuccinat umfaßt, und

c) etwa 24 Gewichtsteile eines in Wasser dispergierbaren die Klebkraft verstärkenden Mittels.

**7.** Ein Verfahren zum Herstellen des druckempfindlichen Klebmittels nach einem der Ansprüche 1 bis 6, das eine Stufe der Polymerisation unter Bedingungen des Rührens in einer autogenen Atmosphäre in Anwesenheit eines geeigneten Polymerisationsinitiators umfaßt.

**8.** Die Verwendung eines anionischen oberflächenaktiven Systems bei der Herstellung einer druckempfindlichen Klebmittelemulsion, bei der das anionische oberflächenaktive System bezogen auf das Gesamtgewicht des anionischen oberflächenaktiven Systems und des Polymeren folgendes umfaßt:

i) 1 bis 2 Gewichts-% eines Natriumalkylethersulfats der Formel:

$$CH_3\text{-}(CH_2)_n\text{-}CH_2O\ (CH_2CH_2O)_xSO_3Na$$

worin n von 6 bis 12 beträgt und x von 2 bis 30, zum Beispiel 20 bis 30, beträgt;
ii) 0,15 bis 0,3 Gewichts-% Dinatrium-ethoxylierteralkylalkohol-halbester von Sulfosuccinsäure, bei dem die Alkylgruppe zum Beispiel 10 bis 12 Kohlenstoffatome enthält;
und
iii)0,1 bis 0,2 Gewichts-% Natriumdialkylsulfosuccinat der Formel:

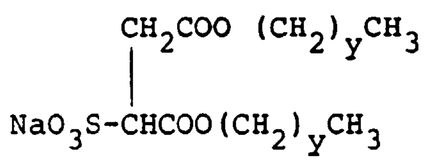

worin jedes y unabhängig voneinander einen Wert von 6 bis 18 aufweist.

**9.** Verwendung nach Anspruch 8, bei der die druckempfindliche Klebmittelemulsion weiterhin ein kompatibles die Klebkraft erhöhendes Mittel enthält, das in einer Menge von bis zu etwa 50 Gewichts-% auf der Basis des Gewichtes von den Polymeren und dem die Klebkraft erhöhenden Mittel vorhanden ist.

**10.** Verwendung nach Anspruch 9, bei dem das die Klebkraft erhöhende Mittel aus Rosinestern, Tallölestern und Mischungen derselben ausgewählt ist.

**Revendications**

**1.** Emulsion adhésive aqueuse sensible la pression comprenant :

(a) un polymère de par nature collant ayant une température de transition vitreuse inférieure à environ -10°C et une teneur en gel supérieure à environ 50 % en poids et comprenant :

i. au moins un ester d'alkyle d'acide acrylique contenant de 1 à 10 atomes de carbone dans le groupe alkyle, la totalité de l'ester d'alkyle étant présente en une quantité variant de 95 % à 97,5 % en poids du polymère et
ii. un mélange d'acides carboxyliques $\alpha$, $\beta$ insaturés éthyléniquement présent dans une quantité totale variant de 2,5 % à 5 % en poids par rapport au polymère; et

(b) un système de tensioactif anionique consistant en, par rapport au poids total du système tensioactif anionique et du polymère :

i. de 1 à 2 % en poids d'un alkyléther sulfate de sodium de formule :

$$CH_3\text{-}(CH_2)_n\text{-}CH_2O(CH_2CH_2O)_xSO_3Na$$

dans laquelle n varie de 6 à 12 et x varie de 2 à 30, par exemple de 20 à 30,
ii. de 0,15 % à 0,3 % en poids d'un hémi-ester d'alcool d'alkyle éthoxylé disodique de l'acide succinique dans lequel le groupe alkyle contient par exemple de 10 à 12 atomes de carbone, et
iii. de 0,1 % à 0,2 % en poids du sulfosuccinate de dialkyle de sodium de formule :

$$\begin{array}{r} CH_2COO(CH_2)_yCH_3 \\ | \quad\quad\quad\quad\quad\quad\quad \\ NaO_3S\text{-}CHCOO(CH_2)_yCH_3 \end{array}$$

dans laquelle chaque y représente indépendamment l'un de l'autre une valeur de 6 à 18.

2. Emulsion adhésive sensible à la pression telle que revendiquée en revendication 1, dans laquelle l'ester d'alkyle de l'acide acrylique est sélectionné parmi l'acrylate du 2-éthylhexyle, l'acrylate de butyle et leurs mélanges.

3. Emulsion adhésive sensible à la pression telle que revendiquée en revendication 1 ou 2, dans laquelle le mélange des acides insaturés éthyléniquement est un mélange d'acide acrylique et d'acide méthacrylique mis en oeuvre dans un rapport pondéral d'acide acrylique à méthacrylique de 1:1 à 1:3, par exemple 1:1 à 1:2.

4. Emulsion adhésive sensible à la pression telle que revendiquée selon l'une quelconque des revendications 1, 2 et 3, dans laquelle l'adhésif est collé par addition d'un agent de collage compatible présent en une quantité allant jusqu'à environ 50 % en poids par rapport au poids du polymère et de l'agent de collage.

5. Emulsion adhésive sensible à la pression telle que revendiquée en revendication 4, dans laquelle l'agent de collage est sélectionné parmi des esters résiniques, des esters de tallol et leurs mélanges.

6. Emulsion adhésive aqueuse sensible à la pression selon la revendication 5, comprenant :

(a) environ 76 parties en poids d'un polymère adhésif de par nature collant, sensible à la pression, ayant une température de transition vitreuse inférieure à environ -10°C et une teneur en gel supérieure à environ 50 % en poids et comprenant environ 97 % en poids d'acrylate de butyle et environ 1,2 % en poids d'acide acrylique et environ 1,8 % en poids d'acide méthacrylique ;
(b) pour chaque 100 parties en poids de polymère, un système tensioactif anionique comprenant :

i. 1,5 parties en poids d'un sulfate de sodium d'un alcool de lauryle éthoxylé contenant environ 25 unités d'oxyde d'éthylène par molécule,
ii. environ 0,24 parties en poids d'un hemi-ester de sulfosuccinate d'alcool [en $C_{10-12}$] éthoxylé disodique et,
iii. environ 0,12 parties en poids de sulfosuccinate de dioctyle de sodium, et

(c) environ 24 parties en poids d'un agent de collage dispersable dans l'eau.

7. Procédé pour préparer un adhésif sensible à la pression selon l'une quelconque des revendications 1 à 6, comprenant une étape de polymérisation sous des conditions d'agitation dans une atmosphère autogène en présence d'initiateurs de polymérisation approprié.

8. Utilisation d'un système tensioactif anionique pour la formation d'émulsion adhésive sensible à la pression, dans laquelle, sur la base du poids total du système tensioactif anionique et du polymère, le système tensioactif anionique comprend :

i. de 1 % à 2 % en poids d'un alkyléther sulfate de sodium de formule :

$$CH_3\text{-}(CH_2)_n\text{-}CH_2O(CH_2CH_2O)_xSO_3Na$$

dans laquelle n varie de 6 à 12 et x de 2 à 30 et par exemple de 20 à 30 ;
ii. de 0,15 à 0,3 % en poids d'un hémi-ester d'acide sulfonique d'alcool d'alkyle éthoxylé disodique dans lequel le groupe alkyle contient par exemple de 10 à 12 atomes de carbone ; et
iii. de 0,1 % à 0,2 % en poids du sulfosuccinate de dialkyle de sodium de formule :

$$CH_2COO(CH_2)_yCH_3$$

|

$$NaO_3S\text{-}CHCOO(CH_2)_yCH_3$$

dans laquelle chaque y représente indépendamment l'un de l'autre une valeur de 6 à 18.

**9.** Utilisation selon la revendication 8, dans laquelle l'émulsion adhésive sensible à la pression comprend en outre un agent de collage compatible présent en une quantité allant jusqu'à 50 % en poids par rapport au poids du polymère et de l'agent de collage.

**10.** Utilisation selon la revendication 9, dans laquelle l'agent de collage est sélectionné parmi des esters résiniques, des esters de tallol et leurs mélanges.